Europäisches Patentamt

European Patent Office

Office européen des brevets

(11) Publication number: **0 241 284 B1**

# EUROPEAN PATENT SPECIFICATION

(45) Date of publication of patent specification: **30.12.92**   (51) Int. Cl.⁵: **H04N 5/44**

(21) Application number: **87303079.5**

(22) Date of filing: **09.04.87**

(54) **Television display system.**

(30) Priority: **11.04.86 GB 8608876**
**30.04.86 US 857375**

(43) Date of publication of application:
**14.10.87 Bulletin  87/42**

(45) Publication of the grant of the patent:
**30.12.92 Bulletin  92/53**

(84) Designated Contracting States:
**DE FR GB IT**

(56) References cited:
**EP-A- 0 162 116**
**FR-A- 1 467 113**

**RUNDFUNKTECHNISCHE MITTEILUNGEN. vol. 25, no. 6, November 1981, NORDERSTEDT DE pages 264 - 269; UWE E. KRAUS: "VERMEIDUNG DES GROSSFLÄCHENFLIM-MERNS IN FERNSEH-HEIMEMPFÄNGERN"**

**PHILIPS TECHNICAL REVIEW. vol. 42, no. 6/7, April 1986, EINDHOVEN NL pages 182 - 200; M.J.J.C. ANNEGARN ET AL.: "DIGITAL SIG-NAL PROCESSING IN TELEVISION RECEIV-ERS"**

(73) Proprietor: **RCA Thomson Licensing Corporation**
**2 Independence Way**
**Princeton New Jersey 08540(US)**

(72) Inventor: **Den Hollander, Willem**
**Spitalstrasse 27**
**CH-8952 Schlieren(CH)**
Inventor: **Leonardi, Giovanni Michele**
**Dennlerstrasse 20a**
**CH-8048 Zurich(CH)**

(74) Representative: **Pratt, Richard Wilson et al**
**London Patent Operation G.E. Technical Services Co. Inc. Essex House 12/13 Essex Street**
**London WC2R 3AA(GB)**

## Description

This invention relates to television display systems such as systems employing field memories arranged to increase the field rate of displayed images for reducing the visibility of flicker.

The threshold of perception of field flicker in a television display system is a function of the flicker frequency and the brightness of the display. Over the years displays have increased in brightness to the point where flicker is noticeable even in relatively high field rate systems (e.g., the NTSC 60 Hz system) and clearly objectionable in lower field rate systems (e.g., the PAL 50 Hz system). A solution to this problem is to double the field rate of displayed images as described, for example, by Lord et al. in U.S. Pat. US-A-4,322,750 entitled TELEVISION DISPLAY SYSTEM which issued March 30, 1982. In an example of the Lord et al. system, a video input signal is stored in a field memory. Each stored field is recovered or "read" twice from the memory and displayed on a display scanned at double the line rate and double the field rate of the incoming video signal thereby doubling the flicker frequency of displayed images and thus reducing the visibility of flicker.

Lord et al. recognize that doubling the field rate of an interlaced signal by repeating fields results in a non-standard field sequence of even-even-odd-odd (E-E-O-O). In order to preserve the vertical resolution of displayed images it is important that even fields overly even fields, that odd fields overlay odd fields and that even and odd fields be interlaced when the double field rate signal is displayed. Lord et al. propose that a E-E-O-O display interlace pattern may be implemented by "perturbing" (i.e., offsetting) the display horizontal scan waveform by one-half line every other field. As an alternative, Lord et al. suggest that the vertical scan waveform may be "perturbed". The specific waveform proposed by Lord et al. for "perturbing" the horizontal scan signal requires half-line scans at the end of first and third fields of a four-field sequence with the half-line scans having different reset levels. Specifically, the horizontal scan is reset to its starting point during the last half-line of the first field of the sequence and is reset to its midpoint level for the last half line of the third field of the sequence. A scanning pattern having different reset levels is difficult to implement and particularly so in a high field rate system.

Lord et al. do not disclose any specific means for "perturbing" the horizontal or vertical scan waveforms. It is known generally, however, that display interlace patterns may be altered by adding an offset current to the yoke of a kinescope as described, for example, by Loe in U.S. Pat. US-A-2,681,383 which issued June 15, 1954. The use of deflection offset currents for interlace control has certain disadvantages, however, particularly as applied to a field repeating flicker reduction systems. In flicker reduction systems the field rate is relatively high (e.g., 100 Hz for PAL or 120 Hz for NTSC). This high field rate places more critical requirements on the deflection circuit components and complicates the design of the offset current source. Special compensation circuits for the offset signal may be required to minimize interlace errors due to high voltage variations and to avoid line-pairing, mis-convergence, pin cushion problems and other undesirable visual artifacts.

EP-A-0162116 discloses a television display system in which an input interlaced video signal is written to a memory means and read from the memory means at a field rate substantially double the field rate of the input signal, so that a written field is read twice, and having a display means on which the double field rate signal is displayed in accordance with a vertical synchronizing signal, and in which the number of lines per field in the double field rate signal varies but averages the number of lines per field of the input signal, and the vertical synchronising signal defines field periods for the display means of varying length but which average half the field period of the input signal, the number of lines in a given field in the double field rate signal and the period for the given field specified by the vertical synchronising signal being arranged such that even fields overlay even fields, odd fields overlay odd fields, and even and odd pairs of fields are interlaced.

According to the present invention there is provided a television display system in which an input interlaced video signal is written to a memory means, and read from the memory means at a field rate substantially double the field rate of the input signal, so that a written field is read twice, and having a display means on which the double field rate signal is displayed in accordance with a double field rate vertical synchronizing signal, the number of lines per field in the double field rate signal varies but averages the number of lines per field of the input signal, and the vertical synchronizing signal defines field periods for the display means of varying length but which average half the field period of the input signal, the number of lines in a given field in the double field rate signal and the period for the given field specified by the vertical synchronising signal being arranged such that even fields overlay even fields, odd fields overlay odd fields, and even and odd pairs of fields are interlaced, characterized by scan generator means responsive to the vertical synchronizing signal for supplying a vertical scan signal to said display means of sawtooth form having a fixed starting point and a retrace time interval shorter than the interval of said vertical synchronizing signal.

In one embodiment of the present invention, the number of lines per field in the double field rate signal alternates (i.e. a two-field cycle) between two numbers, one greater than the number of lines per field in the incoming signal and the other less. Preferably the two numbers each differ by a half from the number of lines per field in the incoming signal. In this embodiment, the vertical synchronising signal repeats in a four field cycle.

In an alternative arrangement, the number of lines per field in the double field rate signal follows the four-field cycle Low-High-High-Low, where "Low" means a number less than the number of lines per field in the incoming signal and "High" means a number greater than the number of lines per field in the incoming signal. The vertical synchronising signal again repeats in a four-field cycle.

Both the arrangements referred to above can be provided such that after a written field has been read twice, the read-out double field rate signal has taken exactly the same time as one field in the incoming signal. This can be advantageous with certain designs for the memory means, by allowing synchronous reading and writing control signals, so that they can be provided by common timing signals.

If it is acceptable for the reading and writing operations not to be synchronised, the number of lines per field and the vertical synchronisation signal may follow longer cycles, of e.g. eight fields or even more.

In general, it appears to be desirable to adhere to the following rules:

a) Each field in the double field rate signal should have a whole number of lines.

b) For the first field in a pair of repeated fields in the double field rate signal, the field period defined by the vertical synchronising signal should equal the period of the field in the double field rate signal.

c) For the second field in a pair of repeated fields in the double field rate signal, the field period defined by the vertical synchronising signal should differ by half a line period from the period of the field in the double field rate signal, the period defined by the vertical synchronising signal being half a line period short for odd fields and half a line period long for even fields.

By means of the present invention it may be possible to provide a flicker reduced display system of the field repeating type which avoids the need (and complexity) of multiple scan reset levels and also avoids the aforementioned problems associated with the use of offset current in the display deflection system.

An embodiment of the present invention, given by way of non-limitative example, will now be described with reference to the accompanying drawings, in which:

FIGURE 1 is a block diagram of a television receiver embodying the invention.

FIGURE 2 is a block diagram illustrating details of memory organization used in the receiver of FIGURE 1;

FIGURE 3 is a block diagram illustrating details of a timing unit used in the receiver of FIGURE 1;

FIGURES 4A-4D are waveform diagrams illustrating operation of the receiver of FIGURE 1;

FIGURE 5 is a simplified block diagram of a vertical scan generator suitable for use in the receiver of FIGURE 1;

FIGURE 6 is a waveform diagram illustrating operation of the scan generator of FIGURE 5; and

FIGURES 7 and 8 are detailed schematic circuit diagrams of a vertical scan generator suitable for use in the receiver of FIGURE 1.

In the drawings, like elements are denoted by like reference numerals.

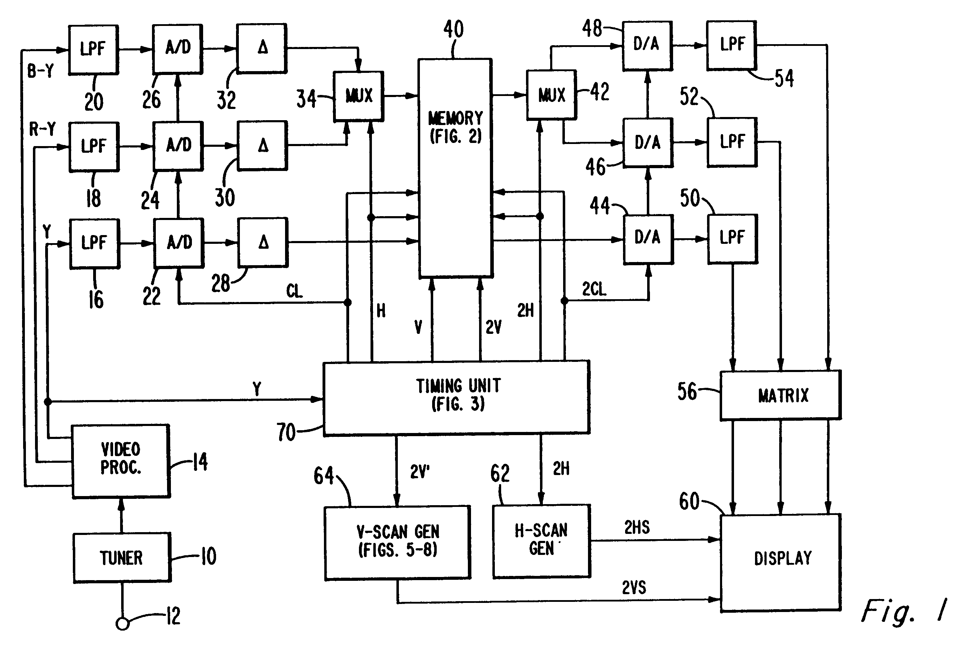

The receiver of FIGURE 1 includes a tuner 10 having an input terminal 12 for connection to an antenna or other source of video input signal and having an output for supplying a baseband video output signal to a video processing unit 14. For purposes of illustration it will be assumed that the video signal is of the PAL standard. It will be appreciated, however, that the principles of the invention apply also to other standard interlaced video signal formats. Video processor 14 includes a PAL decoder that converts the input signal to Y, R-Y and B-Y component form. The signal could be processed, if desired, in R, G, B component form but R, G, B components each have full video bandwidth while the color difference signals (R-Y, B-Y) have a lower bandwidth. Accordingly, a field store for color difference signals can be realized with fewer memory elements than would be the case if processing were done using R, G, B components.

The Y, R-Y and B-Y component signal are low pass filtered by filters 16, 18 and 20 and converted to digital form by analog-to-digital (A/D) converters 22, 24 and 26 for storage in a memory 40. Filters 16-20 minimize aliasing and have cutoff frequencies of 7.5 MHz for Y and 2.8 MHz for the color difference signals R-Y and B-Y for the assumed PAL input signal. Lower cut off frequencies would be appropriate for NTSC standard signals.

Converters 22-26 digitize the low pass filtered components to an 8-bit resolution using a sample clock CL that is phase locked to a multiple of horizontal sync in order to obtain a constant number of samples per horizontal line. After A/D conversion the digitized components are applied to memory 40 via respective delay units 28, 30 and 32. The delay units may be variable and are included to equalize the delay times of the three input signal paths. The color difference components R-Y and B-Y are applied to memory 40 via a multiplex switch (MUX) 32 controlled by a horizontal line rate signal H. Switch 32 combines the two 8-bit wide color differences into a single 8-bit wide signal to minimizing storage requirements in memory 40.

As one field of the multiplexed 8-bit signal and the 8-bit luma signal are stored in memory 40, a field previously stored is read out twice using a read clock signal 2 CL of double the write clock CL frequency. This doubles the field rate (100 Hz for PAL, 120 Hz for NTSC) and so reduces the perception of flicker where the signal is displayed on display unit 60. A multiplex switch 42 demultiplexes the color difference signals which, with the double field rate luma signal, are converted back to analog form by digital to analog converters 44-48. Low pass filters 50-54 suppress the repeat spectra after D/A conversion, suitable cut-off frequencies being 13.5 MHz for luma and 6.75 MHz for chroma. The double field rate analog signals are then converted to R G B form for application to display 60 which is synchronized by means of "double speed" horizontal (2HS) and vertical (2VS) sweep signals provided by generators 62 and 64, respectively.

Timing signals for controlling the digital converters, memory, switches and scan generators are provided by timing unit 70 as discussed in detail subsequently. As will be explained, unit 70 generates two-field and four-field pulse sequences for memory control and scan generation selected to ensure that even fields overlay even fields, odd fields overlay odd fields and even and odd pairs of fields are interlaced when the double field rate signal is displayed.

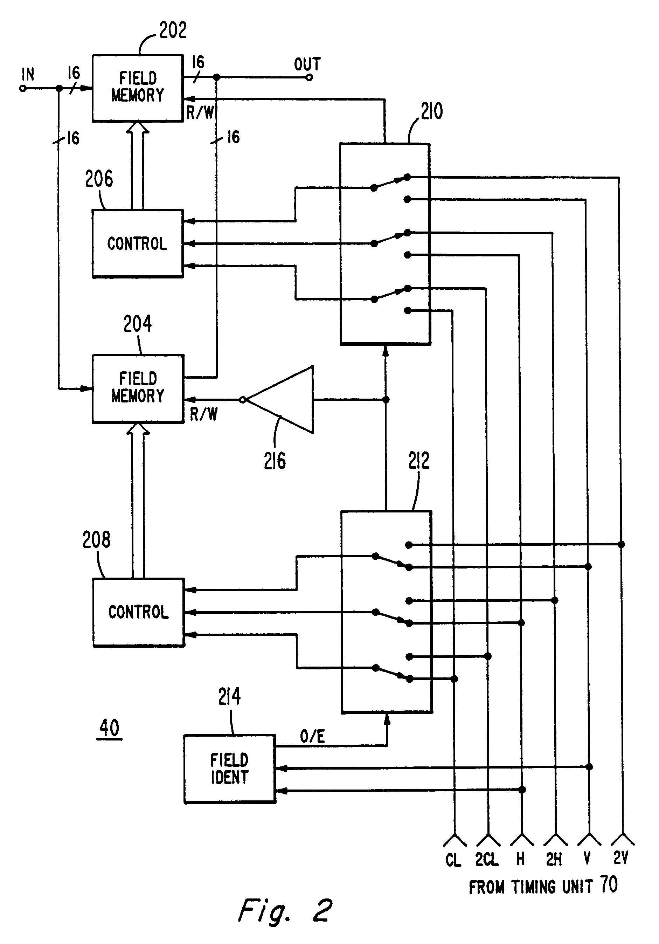

FIGURE 2 provides details of the organization of memory 40. The memory comprises a pair of field memories 202 and 204 each having a control unit (206,208) coupled thereto for providing addresses and control pulses such that the memories operate as multiple line stores. Pixel addresses are generated by counting the clock signals CL or 2CL and line addresses are obtained by counting the line rate signals H or 2H. The vertical rate signal V or 2V is used to reset the addresses and thus initiate a read or write cycle. Selection of normal rate timing signals H,V, CL and the double rate timing signals 2H, 2V, 2CL for control units 206 and 208 is provided by switches 210 and 212. These switches are controlled by an odd-even (O/E) field identification signal produced by a field identification unit 214. The odd-even signal is also applied to the read/write control input of memory 202 and, via inverter 216, to the read/write input of memory 204.

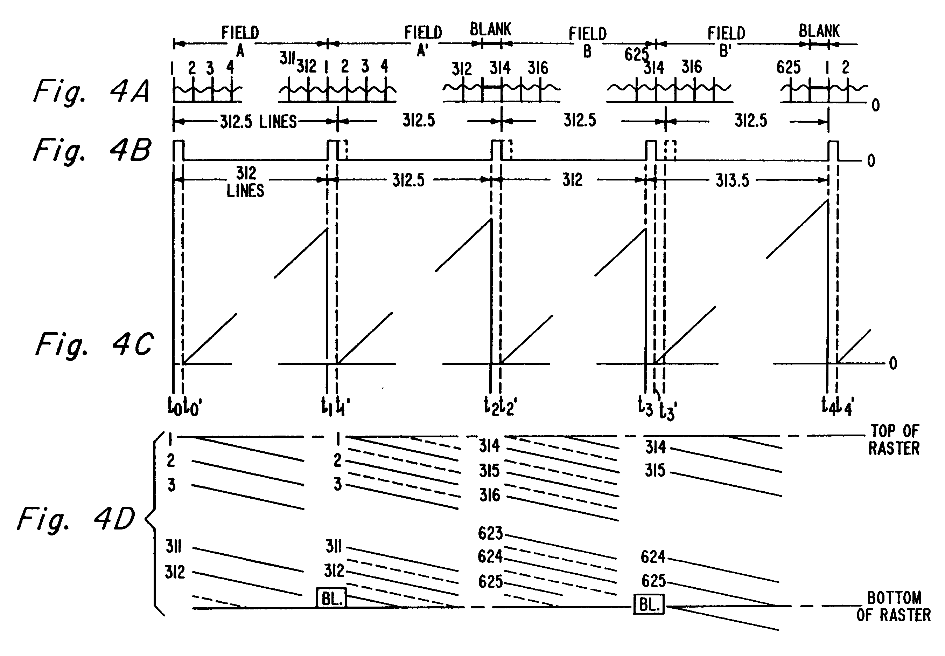

In operation, as a field is being stored in one memory the field previously stored in the other memory is read out twice. The odd-even signal, obtained from horizontal and vertical sync by unit 214, selects which field memory is used for writing and which is used for reading. This signal (O/E) also controls the switches 210 and 212 which connect the normal rate signals CL, H and V to the storing memory and connect the double rate signals 2CL, 2H and 2V to the memory being read. At the beginning of each field the V signal selects the first line store in the writing memory. Each successive line being stored is selected by signal H and pixels are clocked in by clock signal CL. Reading out takes place in a similar manner. Signal 2CL clocks the stored pixels out of the memory. Signal 2V selects the first line of field to be read, that is, it initiates the read cycle. Signal 2H advances the line address for recovering the field. A field consists of 312.5 lines in the PAL standard. At double speed read out this field together with its repition must consist of 625 lines. Without upsetting the horizontal line rate, this can be realized when one of the two fields consists of 312 lines and the other consists of 313 lines. The memory 40 is supplied with timing signals from unit 70 to provide the field sequence shown in FIGURE 4A in which 312 lines are produced in the first read cycle (fields A and B) and 313 lines are produced during the second memory read cycle (A' and B') with the 313th line being blank.

This field sequence 312-313-312-313 from memory 40 is obtained by decoding counts 0 to 3 and 312 to 315 in a divide-by-625 line counter in unit 70 which counts 2H pulses. The decoder output is supplied as the 2V read control signal to memory 40. Since the 2V signal initiates each read cycle in memory 40, as previously explained, and the decoder signal has a period of 312-313 lines that repeats on a two-field basis, the double rate video output signal will have the same number of lines and two-field repeating pattern and the last line of the second cycle will be blank. A blank line is produced because one more line is read from the memory than was stored. Alternatively, the memory may be paused for one line.

The double field rate vertical sync signal 2V' for generator 64 has a different pulse pattern than that used to initiate the memory read cycles. This is shown in FIGURE 4B where the pulses in phantom represent "normal" (i.e., equidistant) double rate vertical sync pulses having a period of 312.5 line. The solid line represents signal 2V' which is periodic on a four-field basis. As shown, there are 312 lines in field A, 312.5 lines in the repeat field A', 312 lines in field B and 313.5 lines in repeat

field B'. This signal (2V') synchronizes vertical scan generator 64 to produce the vertical scan waveforms shown in FIGURE 4C which result in the interlace patterns shown in FIGURE 4D in which the first fields (A, A') overlay first fields, the second fields overlay second field (B, B') and in which the first and second field pairs (AA', BB') are interlaced. For purpose of comparison, the dashed lines in FIG. 4D illustrate scan lines which would result if the 2V' sync pulses (FIG. 4B) were equidistant rather than being shifted. To ensure proper registration of displayed fields, the sawtooth voltage of FIG. 4C provided by generator 64 always starts at the same value and all retrace times (t0-t0', t1-t1', t2-t2', etc.) are equal. Generator 64 is described in detail subsequently.

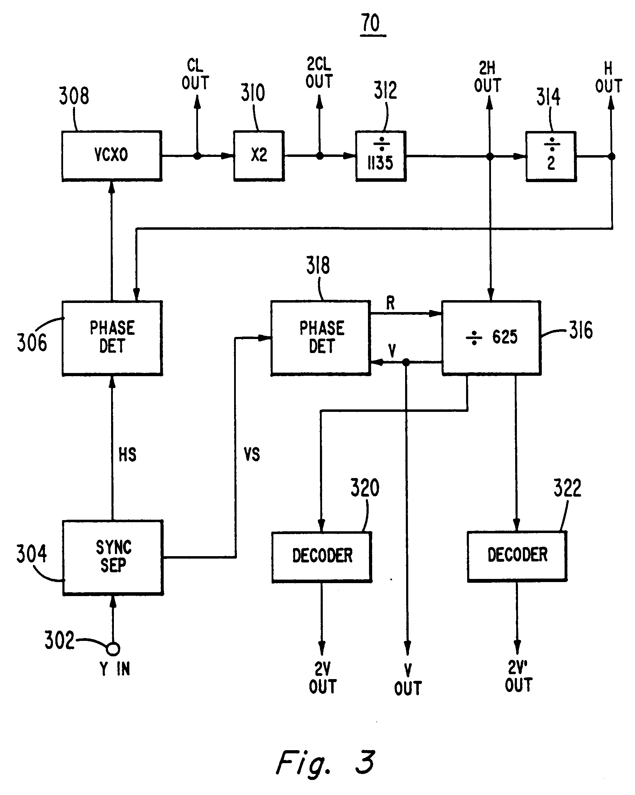

FIGURE 3 provides details of a suitable implementation of timing unit 70. The luma signal Y from processor 14 is applied to the input 302 of a sync separator 304. The horizontal sync (HS) output of separator 304 is applied to the phase detector 306 of a phase lock loop which includes a voltage controlled crystal oscillator (VCXO) 308, a frequency doubler (X2) 310, a divide-by-1135 divider 312, and a divide-by-two divider 314 connected in a loop. In operation of this portion of unit 70, when the loop (306-314) is in lock VCXO 308 will oscillate at a frequency of 1135 times the horizontal frequency (HS). This frequency (17.734375 MHz) is used as the clock signal CL for A/D converters 22-26 and as the pixel write clock for memory 40 and corresponds to four times the PAL subcarrier frequency without the 25 Hz offset so that the clock can be line synchronous. The double rate clock 2CL for D/A converters 44-48 and memory read operations is provided by doubler 310 which doubles the frequency of clock signal CL. Using a VCXO directly at the 2CL clock frequency is less satisfactory because at such a high frequency the control range of VCXO 308 may be relatively narrow. The use of a doubler for generating the 2 CL signal allows lower frequency operation of the VCXO and thus improves the control range. Signal 2CL is divided by 1135 in divider 312 to produce the double line rate signal 2H for MUX switch 42 and memory 40. Signal 2H, in turn is divided by two in divider 314 to produce the normal rate horizontal sync signal H which is compared in phase detector 306 with the phase of HS provided by sync separator 304 to provide the control voltage for the VCXO 308. The inclusion of all frequency changing elements (multipliers and dividers) within the loop 306-314 ensures a well defined frequency and phase relationship between signals CL, 2CL, H and 2H as compared with the alternative of using open loop (external) multipliers or dividers.

The double line rate signal 2H of divider 312 is divided by 625 in divider 316 to produce the vertical sync signal V that initiates the write cycles of memory 40. Phase detector 318 compares signal V with the vertical sync signal VS produced by sync separator 304 and supplies a reset signal to divider 316 for synchronizing signal V with signal VS. The double field rate vertical signal 2V that initiates read cycles of memory 40 is provided by decoder 320 which decodes counts 0 to 3 and 312 to 315 of divide-by-625 divider 316. The period between pulses therefore alternates on a two field basis between 312 and 313 lines as in necessary for initiating the memory read cycles as previously explained. The double field rate signal 2V' for vertical scan generator 64 is provided by decoder 322 which decodes the output of divider 316 to provide the pulse sequence having a four field sequence of 312, 312.5, 312 and 313.5 line intervals (FIG. 4B). The half line intervals may be provided by delay elements in decoder 322 and a field counter can be used to select the correct decoded line count over the four field sequence. Alternatively, the 2H signal may be doubled and divided by 1250 to allow direct decoding over four fields.

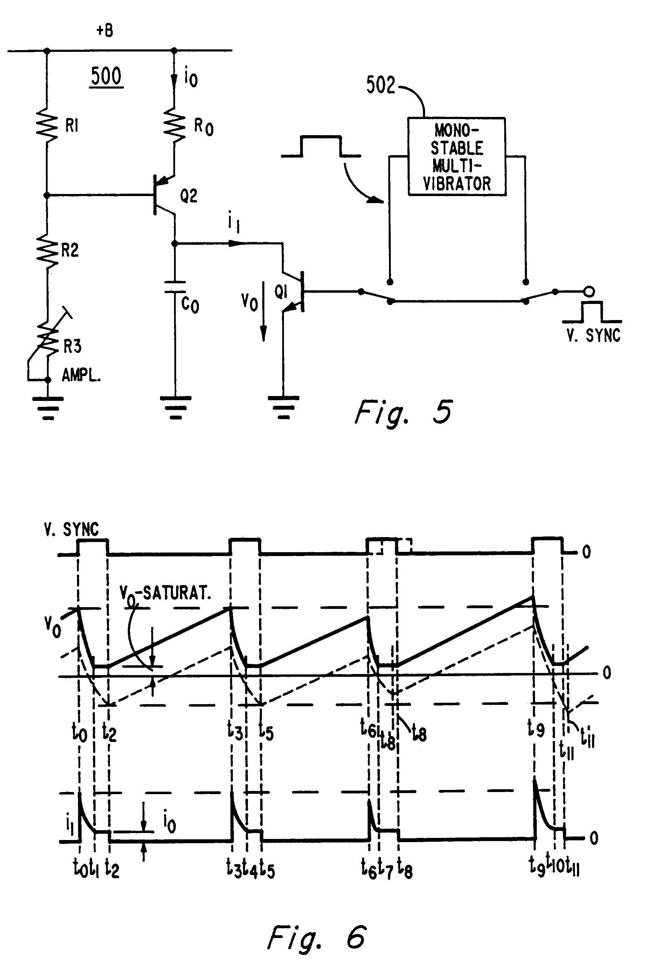

The irregularly spaced double field rate vertical sync pulses (2V') for scan generator 64 cause a slight variation in scan amplitude (FIG. 4C) which , in turn would tend to cause a variation in the retrace times over the four field sequence. In FIGURE 6 the dashed sawtooth waveform shows the undefined raster position which would result if the retrace time of generator 64 was not controlled and if AC-coupling was used to the display vertical amplifier or modulator. The clamped sawtooth generator of FIGURE 5 comprises a current source transistor Q2 biased by resistors R0, R1, R2 and R3 to supply current to sawtooth capacitor Co coupled in parallel with the conduction path of a transistor switch Q1. This generator produces the raster scan shown in solid lines in FIGURE 6 with the proper offset from field to field. The vertical scan always starts at exactly the same position on the screen as controlled by the time shifted vertical sync pulses (2V').

In operation transistor Q1 conducts during the duration of the vertical sync pulse which may be applied directly to the Q1 base electrode (as shown) or conditioned by a monostable multivibrator 502. When Q1 is "ON" the sawtooth voltage (Vo, FIG. 6) is clamped to ground (plus the saturation voltage of Q1) and so the ramp starts from the same voltage in each field. Should the discharge time of capacitor Co exceed the width of the 2V' sync pulse, multivibrator 502 may be used to provide a wider pulse. It is apparent from FIG. 6 that clamping of the sawtooth generator by a pulse of constant width produces a constant retrace time in spite of the fact that the scan amplitudes vary slightly from field to field.

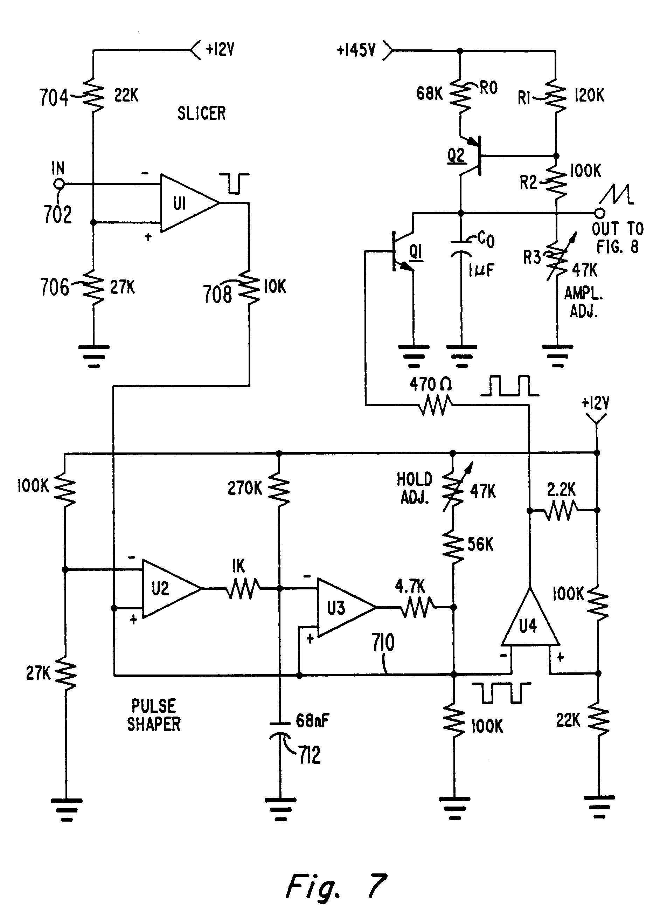

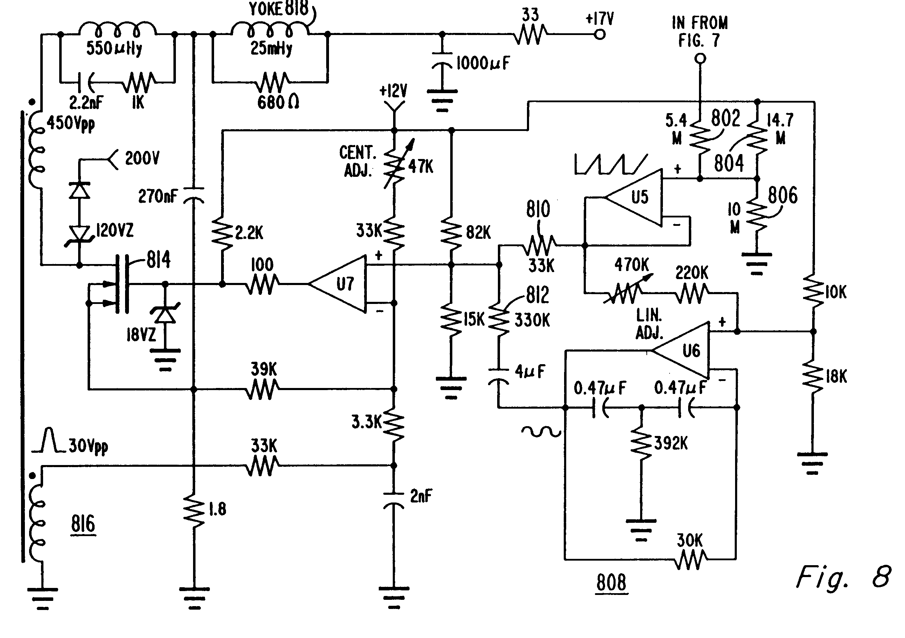

As previously mentioned, the DC component of the vertical sawtooth should be preserved and transmitted to the deflection yoke. DC coupling should be used between the sawtooth generator and the vertical amplifier (or modulator) as well as to the yoke coil. FIGURES 7 and 8 are detailed circuit diagram of a vertical scan generator having these features and having the constant retrace time (to-to', t1-t1' etc. of FIG. 4C) and the consistent reset level features important for achieving proper raster registration in the double field rate receiver of FIGURE 1 which employs non-equidistant vertical sync pulses.

In FIGURE 7 the sync pulse 2V' is applied to input 702 of a signal slicer comprising amplifier U1 biased by resistors 704 and 706. Representative element values are shown for all components. The output of the slicer amplifier U1 is applied via resistor 708 to a pulse shaping circuit comprising amplifiers U2, U3 and U4 which generate a constant width reset pulse for triggering transistor Q1 of the ramp generator circuit 500 of FIGURE 5. A hold control (variable 47K ohm resistor) in the pulse shaping circuit allows pulse width adjustment by varying the monostable period of the pulse "stretcher" formed by amplifier U2 and U3. Amplifier U4 inverts the conditioned pulses to provide the proper polarity drive signal for transistor Q1 of ramp generator 500.

In the vertical deflection circuit of FIGURE 8 the ramp signal of FIG. 7 is DC biased by means of resistors 802-806 and buffered by amplifier U5. The output of amplifier U5 is applied to a linearity correction circuit (indicated generally as 808) which produces a smoothed linearity correction signal that is added to the ramp signal by means of resistors 810 and 812. Amplifier U7 applies the corrected sweep signal to the driver transistor 814 of the vertical output stage (indicated generally as 816). It will be noted from FIGURES 7 and 8 that DC coupling is used at every stage of the vertical processing from terminal 702 of the slicer of FIGURE 7 to the yoke coil 818 in FIGURE 8.

Our co-pending European Patent Application (RCA 83099) gives further description of deflection circuits suitable for use with the present invention.

In the illustrated embodiment, the number of lines per field read from the memories follows the pattern 312, 313, 312, 313 while the vertical synchronising signal has a four-field pulse sequence of 312, 312.5, 312, 313.5 line intervals. An alternative arrangement is a four-field sequence for the memory read cycles of 312, 313, 313, 312 with a vertical synchronising sequence of 312, 312.5, 313, 312.5. In this arrangement the odd-even (O/E) signal can still be used to control the read/write inputs of memories 202 and 204.

If it is acceptable for reading not to switch between memories 202 and 204 synchronously with writing, so that for a short period the same memory is being both written to and read from, other sequences may be used in which the total number of lines in a first and a second read cycle is not necessarily 625. For instance, the number of lines per field may follow the eight-field sequence 313, 313, 312, 312, 312, 313, 313, 312, while the vertical synchronising signal has a corresponding sequence of 313, 312.5, 312, 312.5, 312, 312.5, 313, 312.5.

**Claims**

1. A television display system in which an input interlaced video signal is written to a memory means (40, 202, 204), and read from the memory means at a field rate substantially double the field rate of the input signal, so that a written field is read twice, and having a display means (60) on which the double field rate signal is displayed in accordance with a double field rate vertical synchronizing signal (2V'),

   the number of lines per field in the double field rate signal varies but averages the number of lines per field of the input signal, and the vertical synchronizing signal defines field periods for the display means of varying length but which average half the field period of the input signal, the number of lines in a given field in the double field rate signal and the period for the given field specified by the vertical synchronising signal being arranged such that even fields overlay even fields, odd fields overlay odd fields, and even and odd pairs of fields are interlaced, characterized by

   scan generator means responsive to the vertical synchronizing signal (2V') for supplying a vertical scan signal to said display means of sawtooth form having a fixed starting point and a retrace time interval shorter than the interval of said vertical synchronizing signal (2V').

2. A television display system according to Claim 1 in which a timing means (70) provides the said vertical synchronizing signal (2V') and a read-out field signal (2V) which defines the fields of the double field rate signal, which timing means includes phase locked loop means (306, 308, 310, 312, 314) responsive to a horizontal synchronizing component (HS) of said video input signal for providing a double line-rate output signal (2H), counter means (316) responsive to said double line rate output signal for providing a vertical rate output signal (V), phase detector means (318) coupled to said counter means (316) for synchronizing said vertical rate output signal (V) with a vertical synchronizing component (VS) of said video input signal and decoder means (320, 322) coupled to said counter means (316) for producing said vertical synchronizing signal (2V') and said readout field signal (2V).

3. A television display apparatus according to Claim 2 in which said phase lock loop means includes controllable oscillator means (308) having a given frequency control range and frequency multiplier means (310) in said phase lock loop means so as to increase the effective control range of said controllable oscillator means.

## Patentansprüche

1. Fernseh-Anzeigesystem, in dem ein verschachteltes (interlaced) Eingangs-Videosignal in Speichermittel (40,202,204) schreibbar ist und von den Speichermitteln mit einer - gegenüber der Halbbildrate des Eingangssignals - im wesentlichen doppelten Halbbildrate (field rate) lesbar ist, so daß ein geschriebenes Halbbild zweimal lesbar ist,
mit einem Anzeigemittel (60) auf welchem das Signal mit doppelter Halbbildrate anzeigbar ist in Übereinstimmung mit einem Vertikal-Synchronsignal (2V') doppelter Halbbildrate, bei dem die Anzahl der Zeilen pro Halbbild im Doppel-Halbbildratensignal variiert, jedoch im Mittel die Anzahl der Zeilen pro Halbbild des Eingangssignals hat und
bei dem das Vertikal-Synchronsignal für das Anzeigemittel Halbbildperioden variierender Länge definiert, jedoch mit im Mittel halber Halbbildperiode des Eingangssignals, wobei die Anzahl von Zeilen in einem gegebenen Halbbild bei dem Doppel-Halbbildratensignal und der Zeitdauer für das gegebene Halbbild, welches von dem Vertikal-Synchronsignal bezeichnet ist, so arrangiert sind, daß gerade Halbbilder geraden Halbbildern überlagert werden, ungerade Halbbilder ungeraden Halbbildern überlagert werden und gerade und ungerade Paare von Halbbildern abgewechselt werden (interlaced),
**gekennzeichnet durch**
Abtastgeneratormittel, die abhängig vom Vertikal-Synchronsignal (2V') sind, zum Zuführen eines sägezahnförmigen VertikalAbtastsignales an das Anzeigemittel, welches Signal einen festen Startpunkt und ein Rücklaufzeitintervall hat, das kürzer als das Intervall des Vertikal-Synchronsignals (2V') ist.

2. Fernseh-Anzeigesystem nach Anspruch 1, bei dem Zeitgebermittel (70) das Vertikal-Synchronsignal (2V') und ein Auslese-Halbbildsignal (read-out field signal 2V) bereitstellen, welche die Halbbilder (fields) des Doppel-Halbbildratensignals festlegen, wobei die Zeitgebermittel beinhalten:

- PLL-Mittel (306,308,310,312,314), die abhängig von einer Horizontal-Synchronkomponente (HS) des Video-Eingangssignals sind, zum Bereitstellen des Doppel-Zeilenraten-Ausgangssignals (2H),
- Zählermittel (316), die abhängig von dem Doppel-Zeilenraten-Ausgangssignal zum Bereitstellen eines Vertikalraten-Ausgangssignals (V) sind,
- Phasen-Detektormittel (318), die mit den Zählermitteln (316) gekoppelt sind zum Synchronisieren des Vertikalraten-Ausgangssignals (V) mit einer Vertikal-Synchronkomponente (VS) des Video-Eingangssignals und
- Dekodermittel (320,322), die mit den Zählermitteln (316) zum Erzeugen des Vertikal-Synchronsignals (2V') und des Auslese-Halbbildsignals (2V) gekoppelt sind.

3. Fernseh-Anzeigegerät nach Anspruch 2, in welchem die PLL-Mittel (PLL, phase locked loop) aufweisen:
- steuerbare Oszillatormittel (308) mit einem gegebenen Frequenz-Steuerbereich und
- Frequenz-Multipliziermittel (310) in den PLL-Mitteln, womit der effektive Steuerbereich der steuerbaren Oszillatormittel vergrößert wird.

## Revendications

1. Système d'affichage pour la télévision dans lequel un signal vidéo d'entrée entrelacé est inscrit dans une mémoire (40, 202, 204) et est lu à partir de cette mémoire selon une vitesse de trame sensiblement double de la vitesse de trame du signal d'entrée de manière qu'une trame écrite soit lue deux fois, et comportant des moyens d'affichage (60) sur lesquels est affiché le signal à double vitesse de trame, en fonction d'un signal de synchronisation verticale à double vitesse de trame (2V'),
le nombre de lignes par trame dans le signal à double vitesse de trame varie mais constitue la moyenne du nombre de lignes par trame du signal d'entrée, et le signal de synchronisation verticale défini des périodes de trame pour les moyens d'affichage, de longueur variable mais qui constituent une moyenne de la demie-période de trame du signal d'entrée, le nombre de lignes dans une trame donnée dans le signal à double vitesse de trame et la période pour la trame donnée, spécifiée par le signal de synchronisation verticale, étant choisis de façon que des trames paires recouvrent des trames paires, que des trames impaires recouvrent des trames impaires et que des paires de trames paires et impaires soient entrelacées, caractérisé par

des moyens générateurs de balayage agissant en réponse au signal de synchronisation verticale (2V') pour délivrer un signal de balayage vertical auxdits moyens d'affichage de forme en dents de scie ayant un point de départ fixe et un intervalle de temps de retour plus courts que l'intervalle dudit signal de synchronisation verticale (2V').

2. Système d'affichage pour la télévision selon la revendication 1, dans lequel un moyen de temporisation (70) délivre ledit signal de synchronisation verticale (2V') et un signal de trame lu (2V) qui définit les trames de signal à double vitesse de trame, ledit moyen de temporisation comprend des moyens en boucle à verrouillage de phase (306, 308, 310, 312, 314) agissant en réponse à une composante de synchronisation horizontale (HS) dudit signal d'entrée vidéo, pour fournir un signal de sortie à double vitesse de ligne (2H), des moyens de comptage (316) agissant en réponse audit signal de sortie à double vitesse de ligne pour délivrer un signal de sortie à vitesse verticale (V), des moyens de détection de phase (318) couplés auxdits moyens de comptage (316) pour synchroniser ledit signal de sortie à vitesse verticale (V) avec une composante de synchronisation verticale (VS) dudit signal d'entrée vidéo et, des moyens de décodage (320, 322), couplés auxdits moyens de comptage (316) pour produire ledit signal de synchronisation verticale (2V') et ledit signal de trame lu (2V).

3. Signal d'affichage pour la télévision selon la revendication 2 dans lequel les moyens en boucle à verrouillage de phase comprennent un oscillateur commandable (308) présentant un domaine de commande de fréquences donné et un multiplicateur de fréquences (310) dans lesdits moyens en boucle à verrouillage de phase pour augmenter le domaine de commande affecté audit oscillateur commandable.

Fig. 1

EP 0 241 284 B1

Fig. 2

Fig. 3

Fig. 4A

Fig. 4B

Fig. 4C

Fig. 4D

EP 0 241 284 B1

Fig. 5

Fig. 6

Fig. 7

Fig. 8

EP 0 241 284 B1